# FASCICULE DE BREVET EUROPEEN

(11) **EP 2 647 606 B1**
(45) Date de publication et mention de la délivrance du brevet: **12.09.2018**
(21) Numéro de dépôt: 13162257.3
(22) Date de dépôt: 04.04.2013
(51) Int. Cl.: C03C 17/22, C03C 17/245

(54) **Vitrage comprenant une couche a base d'oxyde de silicium**
Verglasung umfassend eine Schicht aus Siliziumoxid
Glazing including a layer of silicon oxide

(30) Priorité: 04.04.2012 FR 1201008
(43) Date de publication de la demande: 09.10.2013
(73) Titulaire: Saint-Gobain Glass France, 92400 Courbevoie (FR)
(72) Inventeur: Clabau, Frédéric, 75013 PARIS (FR)
(74) Mandataire: Saint-Gobain Recherche

(56) Documents cités:
- EP-A2- 0 536 607
- FR-A1- 2 723 940
- US-A1- 2002 192 365
- US-A1- 2003 224 181

## Description

L'invention est relative à un vitrage incorporant un substrat verrier comprenant sur au moins une partie de sa surface une couche à base d'un oxyde de silicium ou d'un oxynitrure de silicium.
Sans toutefois y être limitée, l'invention s'applique au domaine du bâtiment, plus particulièrement lorsque le substrat est destiné à être agencé dans un environnement humide, tel qu'une salle-de-bain, le substrat formant par exemple la paroi d'une cabine de douche ou d'un pare-baignoire, ou un miroir.
Il est connu qu'un environnement humide induit une corrosion des substrats verriers jusqu'à l'apparition visible de traces blanches, et qu'en parallèle ces substrats se salissent rapidement du fait de dépôts de calcaire.
Afin de réduire les salissures, ces substrats verriers sont de manière connue pour la plupart revêtus de couches hydrophobes. On peut notamment citer le verre commercialisé sous le nom Aquacontrol® de la société SAINT-GOBAIN. US 2003/0224181 décrit aussi un vitrage pour cabine de douche. De manière connue, un revêtement hydrophobe permet à l'eau déposée sur celui-ci de perler sous forme de gouttes. Lorsque les gouttes sont assez grosses, elles s'écoulent naturellement par gravité sur la surface verticale et ne laissent donc pas de traces de calcaire en séchant.
Cette propension d'une goutte d'eau à glisser le long d'une paroi dépend directement de l'hystérèse, c'est-à-dire de la différence entre l'angle d'avancée et l'angle de reculée formés par la goutte avec la surface. Or cet hystérèse varie en fonction d'une part de la rugosité du substrat et d'autre part de l'homogénéité de sa chimie de surface.

Or, en présence d'eau, la surface du verre s'altère (se corrode) progressivement du fait de la perte des cations, notamment du type alcalins, présents initialement dans le matériau verrier. Sous l'effet de cette corrosion, la surface verrière voit sa rugosité augmenter, nuisant à l'évacuation des gouttes d'eau.

En outre, la migration des cations engendre sur un substrat pourvue d'une couche hydrophobe la dégradation de celle-ci, laissant des parties de la surface hydrophiles tandis que d'autres restent hydrophobes. Cette inhomogénéité chimique tend également à défavoriser l'écoulement des gouttes d'eau.

Aussi est-il particulièrement conseillé d'intégrer une couche d'interface entre le substrat verrier et la couche fonctionnelle hydrophobe, qui joue le rôle de barrière aux alcalins responsables de la dégradation de la couche hydrophobe et de la corrosion du verre.

En tant que couche barrière aux alcalins, on peut par exemple citer une couche d'oxyde de silicium ou de nitrure de silicium.

Cependant, cette couche barrière n'est pas toujours déposée préalablement sur les vitrages hydrophobes, en particulier ceux utilisés en intérieur, afin de ne pas alourdir les coûts de fabrication du vitrage.

Par ailleurs, si en extérieur l'évacuation des gouttes d'eau sur un vitrage hydrophobe est favorisée par la présence d'un flux d'air tel que le vent, en intérieur ce n'est pas le cas. En particulier, les gouttes d'eau sur une paroi hydrophobe de cabine de douche ont tendance pour une grande partie à rester accrochées.

Aussi, bien qu'un revêtement hydrophobe utilisé en salle-de-bain soit appréciable pour enlever facilement les salissures, il est grandement recommandé après projection d'eau et formation de gouttes se détachant difficilement seules, d'essuyer la vitre à l'aide d'une raclette pour la rendre propre et sèche.

Toutefois, en fonction des habitudes, le geste d'essuyage n'est pas systématique, et lorsque la vitre n'est pas essuyée, les gouttes d'eau forment en séchant des dépôts de calcaire très concentrés et visibles.

Si le calcaire peut ensuite être nettoyé par des produits idoines nettoyants du type anticalcaire, ces derniers agressent néanmoins le revêtement hydrophobe qui s'altère de manière connue rapidement au cours du temps.

Ainsi, lorsque l'utilisation de produits nettoyants conduit à l'agression du revêtement hydrophobe, voire le retire, le verre qui n'a pas de couche barrière se corrode très vite dans le temps, entraînant une augmentation de la rugosité de sa surface. La surface verrière est par la suite de plus en plus difficile à nettoyer du fait de l'incrustation du calcaire dans la surface rendue rugueuse.

Enfin, les revêtements hydrophobes ne sont pas trempables, ce qui oblige à les déposer après l'étape de trempe et donc après la découpe des panneaux verriers aux dimensions finales. Ceci occasionne évidemment un coût supplémentaire, et implique le plus souvent que le dépôt soit effectué chez les transformateurs du verre alors qu'ils ne sont pas nécessairement équipés pour cela.
Par conséquent, si un revêtement hydrophobe est parfois utile pour les vitrages, il est peu pratique pour des substrats verriers trempés, tels que ceux utilisés en salle de bains, pour lesquels les gouttes d'eau ne sont pas toujours essuyées après chaque projection, et qui sont destinés à être fréquemment nettoyés avec des produits agressifs.
L'invention a donc pour but de fournir un vitrage qui, au cours de sa vie et de son utilisation, ne présente pas les inconvénients précités, en particulier l'accumulation de calcaire à sa surface, et qui soit simple de fabrication, tout en pouvant subir une étape de trempe.
Selon l'invention, le vitrage incorporant un substrat verrier comprenant sur au moins une partie de sa surface une couche à base d'un oxyde de silicium ou d'un oxynitrure de Silicium, est caractérisé en ce que la couche est unique, le substrat verrier ne présentant aucune couche inférieure ou supérieure empilée sur ladite couche, et en ce que ladite couche consiste en une couche de SiOₓ ou SiOₓN_{y} avec x>0 et y> 0, comprenant un ou plusieurs éléments dopants choisis dans le groupe constitué par Al, Ga ou B avec un pourcentage atomique, rapporté au nombre total de cations présents dans ladite couche, supérieur à 8 %.
Selon une caractéristique, la couche est déposée par pulvérisation cathodique assistée par champ magnétique (magnétron) et présente une densité supérieure à 90 % de la densité du matériau massif.
Selon une autre caractéristique, le pourcentage atomique de l'élément dopant est d'au moins 10 %.

Dans une variante de réalisation, l'élément dopant est le Bore avec un pourcentage atomique d'au moins 13 %.

Dans une autre variante, l'élément dopant est l'Aluminium avec un pourcentage atomique d'au moins 13 %.

De préférence, la couche est à base de SiO₂.

Selon l'invention, la couche présente la fonction anticalcaire. La couche permet de limiter le dépôt de calcaire par rapport au verre nu et par rapport aux couches hydrophobes.

La présente couche ne subit selon l'invention après son dépôt aucun traitement supplémentaire visant à la rendre hydrophile ou hydrophobe. Après le dépôt de la couche sur le substrat, sa surface présente un angle de contact toujours supérieur à 20°, le plus souvent supérieur à 25°, voire supérieur à 30°. L'angle de contact est généralement compris entre 25 et 50°, par exemple entre 30 et 45°. Au sens de la présente invention, on désigne classiquement sous le terme d'angle de contact (aussi parfois nommé angle de mouillage ou angle de raccordement) l'angle que forme une goutte d'eau posée sur la surface du vitrage (muni de la couche), posé à plat, à l'interface entre le liquide et le support.

En outre, elle présente l'avantage de faire barrière à la migration des ions contenus dans ledit substrat, notamment du type alcalins Na+ ou K+, et ainsi de retarder grandement l'apparition de la corrosion.

Ainsi, la couche de l'invention a plusieurs rôles, anticalcaire et anticorrosion, sans nécessiter de lui associer une quelconque autre couche.

Même si le rôle de barrière aux alcalins est en soi connu par la présence d'une couche d'oxyde de silicium, les inventeurs ont mis en évidence de manière inattendue un effet barrière très performant dès l'ajout d'un élément dopant à choisir parmi Al et/ou B et/ou Ga dans un pourcentage atomique total supérieur à 8% par rapport au nombre total de cations. Par ailleurs, les inventeurs ont mis en évidence de manière inattendue un nouvel effet, celui de s'opposer au dépôt de calcaire sans avoir à ajouter une couche fonctionnelle.

L'invention se rapporte également à l'utilisation d'un vitrage tel que décrit ci-dessus agencé dans un environnement humide dans lequel des gouttes d'eau sont destinées à se former sur le vitrage.

Le vitrage est en particulier utilisé en tant que vitrage de salle-de-bain, notamment pour cabine de douche ou pare-baignoire, ou miroir.

L'invention est maintenant décrite à l'aide d'au moins un exemple uniquement illustratif et nullement limitatif de la portée de l'invention.

Le vitrage de l'invention intègre un substrat verrier comportant une unique couche de revêtement, dite couche anticalcaire, au moins sur une partie de surface, partie destinée à être exposée à un environnement humide, tel que dans une salle-de-bain, et plus particulièrement destinée à recevoir des projections d'eau.

Selon l'invention, aucune autre couche n'est déposée sur la couche anticalcaire.

Le substrat est en verre sodo-calcique, d'une épaisseur par exemple de 8 mm, et commercialisé sous la référence PLANILUX® par la société déposante.

Selon l'invention, la couche unique de revêtement anticalcaire comprend un oxyde de silicium SiOₓ, de préférence SiO₂, ou un oxynitrure de silicium SiOₓN_{y}, avec x>0 et y> 0.

Elle comprend en outre un ou plusieurs éléments dopants choisis dans le groupe constitué par l'Aluminium (Al), le Gallium (Ga) ou le Bore (B) avec un pourcentage atomique par rapport au nombre total de cations qui est supérieur à 8 %, de préférence supérieur à 10 %, par exemple de l'ordre de 13 %, voire 18 %.

Le pourcentage optimal pourra être différent selon le type de dopant.

A titre d'exemple, la couche est constituée de SiO₂:Al, avec 13 % d'Aluminium.

De manière conventionnelle, la couche anticalcaire est obtenue dans une enceinte de pulvérisation cathodique assistée par champ magnétique (magnétron).

Par exemple, deux cibles dont une en SiO₂ et l'autre en Al₂O₃ constituent des cathodes et sont co-pulvérisées par un plasma de gaz Argon dans l'enceinte. Avant le dépôt, un vide est effectué dans l'enceinte jusqu'à atteindre une valeur résiduelle de 0,5 millipascal (mPa).

Le procédé relatif aux débits et pressions des gaz servant à la pulvérisation des cibles ainsi que la puissance appliquée sur chacune des cibles ne sera pas davantage décrit car bien connu.

Le substrat verrier ainsi revêtu peut être soumis à un procédé de trempe.

Selon l'invention, le substrat verrier ainsi revêtu de son unique couche est utilisable tel quel.

Les inventeurs ont mis en évidence de manière inattendue son rôle essentiel de lutte contre le dépôt de calcaire.

Dans un exemple de réalisation qui est comparé avec un vitrage de l'état de la technique, on a exposé un vitrage de l'invention et un vitrage revêtu d'une couche hydrophobe à une projection d'eau du robinet deux fois par jour pendant deux mois.

Le vitrage de l'invention et celui de référence, de type connu, ont la même nature de substrat verrier.

Le vitrage de référence présente un revêtement hydrophobe usuel, en l'espèce un verre commercialisé sous la marque Aquacontrol® de la société déposante.

Le vitrage de l'invention comprend une couche de SiO₂:Al d'épaisseur 80 nm, avec 10 % d'Aluminium.

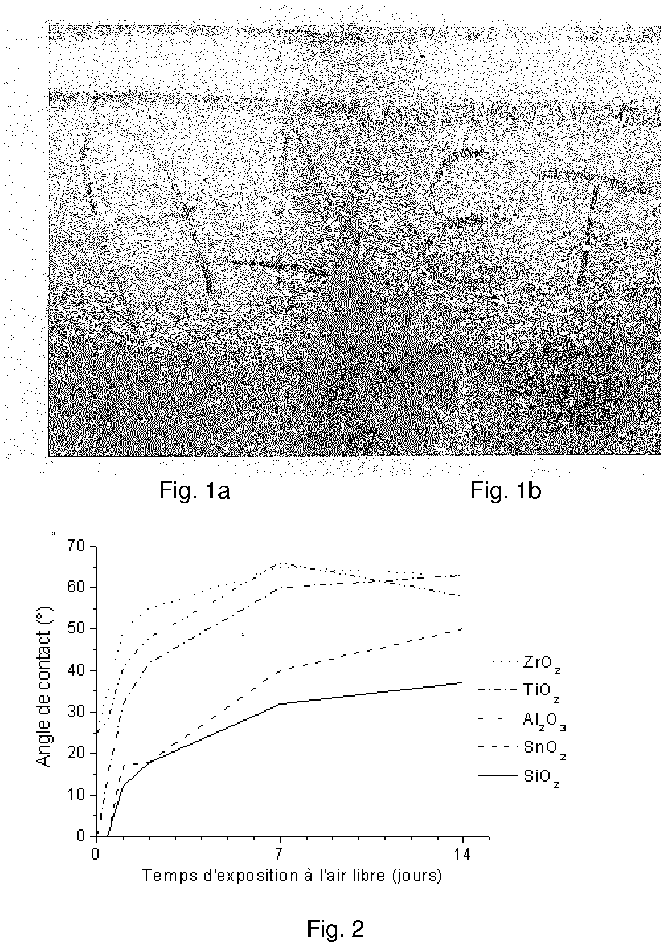

Les figures 1a et 1b illustrent deux photos prises en fin de test, après les deux mois d'exposition, le vitrage de l'invention et le vitrage de référence hydrophobe, les deux vitrages n'ayant jamais été nettoyés.

Il est nettement visible que le dépôt de calcaire est bien moins important sur le vitrage de l'invention (figure 1a) que sur le vitrage de référence hydrophobe (figure 1b).

Les inventeurs ont mis en évidence que la couche anticalcaire de l'invention à base de SiO₂ s'avère particulièrement efficace contre le dépôt de calcaire car ce matériau engendre pour les gouttes d'eau un angle de contact qui augmente très peu avec le temps, permettant un écoulement de l'eau sous forme de film. Ceci n'est en fait pas le cas des revêtements hydrophobes, ni des autres couches inorganiques denses qui pourraient être utilisés comme couches barrières aux alcalins.

En effet, si toutes les couches inorganiques présentent un caractère hydrophile après nettoyage, la pollution générée par les composés organiques volatils présents dans l'air ambiant induit une augmentation progressive de l'hydrophobie. Or comme, il ressort des courbes de la figure 2 illustrant au cours du temps l'évolution de l'angle de contact en fonction de la nature du matériau recouvrant un verre, le matériau SiO₂ se pollue peu avec le temps par rapport à d'autres matériaux tels que ZrO₂ ou TiO₂ par exemple.

La couche anticalcaire à base de SiO₂ est par conséquent particulièrement adaptée.

Très avantageusement, outre son rôle anticalcaire, par la nature de son matériau, à base d'oxyde de silicium ou d'oxynitrure de silicium dopé Al et/ou Ga et/ou B, la couche de l'invention forme une couche barrière aux alcalins, évitant au verre de se corroder, et préservant ainsi dans le temps sa surface.

Le pourcentage de l'élément dopant présente également son importance.

Les inventeurs ont mis en évidence que des pourcentages inférieurs en particulier à 8 % n'étaient pas suffisants pour lutter dans le temps contre la migration des alcalins et éviter par conséquent la corrosion du verre.

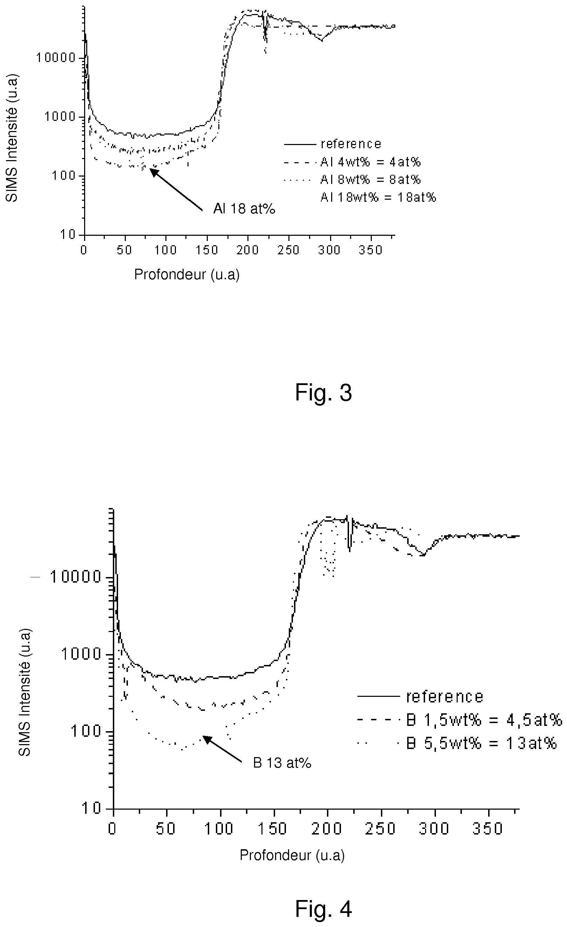

Les figures 3 et 4 montrent par les méthodes classiques de Spectrométrie de Masse d'Ions Secondaires (SIMS), des profils de la concentration en ions Sodium (Na) pour différentes natures de couches barrières depuis la surface jusqu'au substrat verrier selon la séquence et après chauffage à 600°C pendant une heure :
surface/AZO (200mm)/SiO₂:X (100 nm)/verre, avec X l'élément dopant

Ce test réalisé pour visualiser la progression des ions alcalins, notamment pendant la trempe, à travers des couches barrières distinctes déposées sur verre, utilise nécessairement une couche supérieure identique à toutes les couches barrières (ici AZO). En effet, chaque matériau pour lequel est mesurée la concentration en ions Sodium influence le taux de pulvérisation de ces ions, et il n'est donc pas possible de comparer directement deux concentrations dans des couches barrières différentes. La couche fonctionnelle est ici une couche du type AZO, constituée de ZnO dopé par l'Aluminium à 2 pourcents atomiques.

La figure 3 est relative à des couches barrières SiO₂:Al selon des pourcentages d'Aluminium de 0% (reference), 4%, 8% et 18% rapportés au nombre total de cations présents dans lesdites couches.

La figure 4 porte sur des couches SiO₂:B selon des pourcentages de Bore de 0% (reference), 4,5% et 13% rapportés au nombre total de cations présents dans lesdites couches.

Sur ces figures, on peut voir que la couche d'AZO disposée en surface de l'empilement est beaucoup mieux protégée des alcalins dans le cas où la couche barrière d'oxyde de Silicium comprend une forte quantité d'Aluminium ou de Bore selon l'invention, en particulier des teneurs atomiques en Aluminium ou en Bore de plus de 8%, telles que respectivement 18 ou 13%, rapportées au nombre total de cations présents dans lesdites couches barrières.

Par conséquent, la couche de l'invention constitue très avantageusement une couche anticalcaire et une couche barrière aux alcalins, sans nécessiter de la revêtir d'une couche fonctionnelle. Un oxyde de Silicium ou un oxynitrure de Silicium est particulièrement adapté car ne se salissant pas au contact de l'air et engendrant la propriété hydrophile sans s'altérer dans le temps.

## Revendications

1. Vitrage incorporant un substrat verrier comprenant sur au moins une partie de sa surface un revêtement à base d'un oxyde de Silicium ou d'un oxynitrure de Silicium, **caractérisé en ce que** ledit revêtement est constitué d'une unique couche, le substrat verrier ne présentant aucune couche inférieure ou supérieure empilée sur ladite couche unique, et **en ce que** ladite couche consiste en une couche de SiOₓ ou SiOₓN_{y} avec x>0 et y> 0, comprenant un ou plusieurs éléments dopants choisis dans le groupe constitué par Al, Ga ou B avec un pourcentage atomique rapporté au nombre total de cations présent dans ladite couche supérieur à 8 %.

2. Vitrage selon la revendication 1, **caractérisé en ce que** le pourcentage atomique de l'élément dopant est d'au moins 10 %.

3. Vitrage selon la revendication 1 ou 2, **caractérisé en ce que** l'élément dopant est le Bore avec un pourcentage atomique d'au moins 13 %.

4. Vitrage selon la revendication 1 ou 2, **caractérisé en ce que** l'élément dopant est l'Aluminium avec un pourcentage atomique d'au moins 13 %.

5. Vitrage selon l'une quelconque des revendications précédentes, **caractérisé en ce que** la couche est à base de SiO₂.

6. Vitrage selon l'une quelconque des revendications précédentes, **caractérisé en ce que** la couche présente la fonction anticalcaire.

7. Vitrage selon l'une quelconque des revendications précédentes, **caractérisé en ce que** la couche fait barrière à la migration des ions contenus dans ledit substrat, notamment du type alcalins Na+ ou K+.

8. Vitrage selon l'une quelconque des revendications précédentes, **caractérisé en ce qu'**il présente une surface dont l'angle de contact est supérieur à 20°, de préférence supérieur à 25°.

9. Utilisation d'un vitrage selon l'une quelconque des revendications précédentes pour un vitrage agencé dans un environnement humide dans lequel des gouttes d'eau sont destinées à se former sur le vitrage.

10. Utilisation d'un vitrage selon l'une quelconque des revendications précédentes en tant que vitrage de salle-de-bains, en particulier pour cabine de douche ou pare-baignoire, ou miroir.

## Patentansprüche

1. Glasscheibe, enthaltend ein Glassubstrat, das auf zumindest einem Teil seiner Oberfläche eine auf Siliciumoxid oder Siliciumoxidnitrid basierende Beschichtung umfasst, **dadurch gekennzeichnet dass**, die Beschichtung aus einer einzigen Schicht gebildete ist, wobei das Glassubstrat keine auf dieser einzigen Schicht aufgebrachte untere oder obere Schicht aufweist und dass diese Schicht aus einer SiOₓ- oder SiOₓN_{y}-Schicht mit x>0 und y> 0 besteht, umfassend ein oder mehrere Dotierungselemente, ausgewählt aus der Gruppe, die von Al, Ga oder B mit einem Anteil von mehr als 8 Atom-%, bezogen auf die Gesamtzahl der in der Schicht vorhandenen Kationen, gebildet ist.

2. Glasscheibe nach Anspruch 1, **dadurch gekennzeichnet, dass** der Anteil des Dotierungselements mindestens 10 Atom-% beträgt.

3. Glasscheibe nach Anspruch 1 oder 2, **dadurch gekennzeichnet, dass** das Dotierungselement Bor ist, dessen Anteil mindestens 13 Atom-% beträgt.

4. Glasscheibe nach Anspruch 1 oder 2, **dadurch gekennzeichnet, dass** das Dotierungselement Aluminium ist, dessen Anteil mindestens 13 Atom-% beträgt.

5. Glasscheibe nach einem der vorhergehenden Ansprüche, **dadurch gekennzeichnet, dass** die Schicht auf SiO₂-Basis ist.

6. Glasscheibe nach einem der vorhergehenden Ansprüche, **dadurch gekennzeichnet, dass** die Schicht eine Anti-Kalk-Funktion aufweist.

7. Glasscheibe nach einem der vorhergehenden Ansprüche, **dadurch gekennzeichnet, dass** die Schicht eine Barriere für die Wanderung von in dem Substrat enthaltenen Ionen bildet, insbesondere vom alkalischen Typ Na+ oder K+.

8. Glasscheibe nach einem der vorhergehenden Ansprüche, **dadurch gekennzeichnet, dass** sie eine Oberfläche aufweist, deren Kontaktwinkel größer als 20°, vorzugsweise größer als 25° ist.

9. Verwendung einer Glasscheibe nach einem der vorhergehenden Ansprüche für eine Glasscheibe, die in einer feuchten Umgebung angeordnet ist, in der sich Wassertropfen auf der Verglasung bilden werden.

10. Verwendung einer Glasscheibe nach einem der vorhergehenden Ansprüche als Glasscheibe für ein Badezimmer, insbesondere für eine Duschkabine oder eine Badewannen-Trennwand oder einen Spiegel.

## Claims

1. Glazing incorporating a glass substrate comprising, over at least part of the surface thereof, a silicon oxide-based or silicon nitride-based coating, **characterised in that** the said coating is constituted by a single layer, the glass substrate not having any lower or upper layer stacked on said single layer, and **in that** the said layer consists of a layer of SiOₓ or SiOₓN_{y}, where x>0 and y>0, comprising one or more doping elements selected from the group consisting of Al, Ga or B with an atomic percentage, relative to the total number of cations present in the said layer, greater than 8%.

2. The glazing according to claim 1, **characterised in that** the atomic percentage of the doping element is at least 10%.

3. The glazing according to claim 1 or 2, **characterised in that** the doping element is boron with an atomic percentage of at least 13%.

4. The glazing according to claim 1 or 2, **characterised in that** the doping element is aluminium with an atomic percentage of at least 13%.

5. The glazing according to any one of the preceding claims, **characterised in that** the layer is based on SiO₂.

6. The glazing according to any one of the preceding claims, **characterised in that** the layer has an anti-limescale function.

7. The glazing according to any one of the preceding claims, **characterised in that** the layer forms a barrier to the migration of ions contained in said substrate, notably alkali-type Na+ or K+.

8. The glazing according to any one of the preceding claims, **characterised in that** it has a surface of which the contact angle is greater than 20°, preferably greater than 25°.

9. Use of a glazing according to any one of the preceding claims for a glazing fitted in a damp environment, wherein water droplets are intended to form on the glazing.

10. Use of a glazing according to any one of the preceding claims as bathroom glazing, in particular for shower cubicle, bath screen, or mirror.
